# EUROPÄISCHE PATENTSCHRIFT

(11) **EP 3 658 347 B1**
(45) Veröffentlichungstag und Bekanntmachung des Hinweises auf die Patenterteilung: **18.09.2024**
(21) Anmeldenummer: 18731047.9
(22) Anmeldetag: 11.06.2018
(51) Int. Cl.: B29C 45/14, B29C 33/12, B29C 45/00, B29L 31/00, H01R 43/24

(54) **MONTAGEELEMENT, MONTAGESATZ, VERFAHREN ZUM MONTIEREN UND BAUTEIL**
MOUNTING ELEMENT, MOUNTING SET, METHOD FOR MOUNTING, AND COMPONENT
ÉLÉMENT DE MONTAGE, ENSEMBLE DE MONTAGE, PROCÉDÉ DE MONTAGE ET COMPOSANT

(30) Priorität: 27.07.2017 DE 102017212971
(43) Veröffentlichungstag der Anmeldung: 03.06.2020
(73) Patentinhaber: Robert Bosch GmbH, 70442 Stuttgart (DE)
(72) Erfinder: ITTLINGER, Ralph, 71287 Weissach (DE); WITTKO, Lars, 96047 Bamberg (DE); SAHINER, Onur, 96052 Bamberg (DE)
(86) Internationale Anmeldenummer: PCT/EP2018/065310
(87) Internationale Veröffentlichungsnummer: WO 2019/020257

(56) Entgegenhaltungen:
- DE-A1- 102016 101 207
- DE-U1- 20 203 315
- JP-A- 2001 272 109
- KR-B1- 101 283 509
- US-B2- 7 655 319

## Beschreibung

### Stand der Technik

Die vorliegende Erfindung betrifft ein Montageelement, einen Montagesatz, ein Verfahren zum Montieren und ein Bauteil. Die vorliegende Erfindung betrifft insbesondere ein Montageelement, einen Montagesatz und ein Verfahren zur Montage eines Anschlusselements an ein Bauteilgehäuse eines Bauteilkörpers durch zumindest teilweises Umspritzen des Bauteilkörpers mit einem Umspritzmaterial sowie ein Bauteil, welches unter Einsatz des Montageelements, des Montagesatzes und/oder des Verfahrens zur Montage ausgebildet ist.

Bei der industriellen Fertigung von Bauteilen müssen häufig mehrere Bauteilkomponenten miteinander verbunden und nachfolgend gemeinsam von einem einbettenden Umspritzmaterial umgeben werden. Dabei kommen Montageelemente zum Einsatz, welche zwei Bauteilkomponenten aneinander haltern und in Bezug aufeinander positionieren, wobei beim Umspritzen die Positionierung beibehalten werden soll. So ist es zum Beispiel bei vielen Ventilen notwendig, elektrische Anschlüsse eines Grundkörpers des Ventils mit einem Stecker elektrisch zu kontaktieren und dann nachfolgend zumindest einen Teil des Grundkörpers und dessen Gehäuses, sowie der elektrischen Anschlüsse und des damit kontaktierten Steckers im Umspritzmaterial einzubetten. Zum Kontaktieren des Steckers, also für die Vormontage, werden dabei zum Haltern und Positionieren Montageclips als Montageelemente eingesetzt, die den zu kontaktierenden Stecker tragen und sich am Gehäuse des Grundkörpers des Ventils zur Vormontage über Kraftschluss und/oder Formschluss anbringen lassen. Beim Umspritzen wird der Montageclip als verlorenes Element mit im Umspritzmaterial eingebettet.

Herkömmlicherweise können bestehende Montageelemente nicht in jedem Fall beim Vorgang des Umspritzens die einmal gewählte Positionierung zwischen den Bauteilkomponenten aufrechterhalten, wodurch sich ein größeres Maß an Produktionsabweichungen einstellt.

Aus der KR 101 283 509 B1 ist bereits ein Montageelement zur Montage eines Anschlusselements an ein Bauteilgehäuse eines Bauteilkörpers durch zumindest teilweises Umspritzen des Bauteilkörpers mit einem Umspritzmaterial bekannt. Dieses Montageelement ist ausgebildet zum Haltern und Positionieren eines Anschlusselements an einem Bauteilgehäuse eines Bauteilkörpers bei einem zumindest teilweisen Umspritzen des Bauteilkörpers mit einem Umspritzmaterial und zur zumindest teilweisen Aufnahme im Inneren eines Umspritzwerkzeugs während des Umspritzens. Das Montageelement weist mindestens zwei Abstützelemente auf, wobei mindestens zwei Abstützelemente so ausgebildet sind, dass sie sich in einem am Bauteilgehäuse des Bauteilkörpers gehalterten Zustand des Montageelements bei Aufnahme des Bauteilkörpers und des Montageelements im Inneren des Umspritzwerkzeugs an einer Innenseite des Umspritzwerkzeugs abstützen. Die Montageelemente und Halteelemente sind dabei sich schienenartig erstreckend und (recht-)winklig angeordnet aufgebaut.

Aus den US 2004/0020975 A1, US 2014/0352461 A1 und US 2008/0187614 A1 sind auch bereits Montageelemente bekannt, um u.a. an Einspritzventilen Anschlusselemente vor dem Umspritzen vorzumontieren.

### Offenbarung der Erfindung

Das erfindungsgemäße Montageelement mit den Merkmalen des Anspruchs 1 weist demgegenüber den Vorteil auf, dass auch während eines Vorgangs des Umspritzens die einmal gewählte Positionierung zwischen Bauteilkomponenten, die aneinander gehaltert werden, beibehalten werden kann, wodurch sich eine höhere Zuverlässigkeit bei der Produktion einstellt. Dies wird erfindungsgemäß mit den Merkmalen des Anspruchs 1 dadurch erreicht, dass ein Montageelement und insbesondere ein Halteelement oder ein Clip zur Montage eines Anschlusselements an ein Bauteilgehäuse eines Bauteilkörpers durch zumindest teilweises Umspritzen des Bauteilkörpers mit einem Umspritzmaterial geschaffen werden, welche (i) zum Haltern und Positionieren eines Anschlusselements an einem Bauteilgehäuse eines Bauteilkörpers bei einem zumindest teilweisen Umspritzen des Bauteilkörpers mit einem Umspritzmaterial und (ii) zur zumindest teilweisen Aufnahme im Inneren eines Umspritzwerkzeugs während des Umspritzens ausgebildet sind. Das erfindungsgemäße Montageelement weist mindestens zwei Abstützelemente auf, welche so ausgebildet sind, dass sie sich in einem am Bauteilgehäuse des Bauteilkörpers gehalterten Zustand des Montageelements bei Aufnahme des Bauteilkörpers und des Montageelements im Inneren des Umspritzwerkzeugs an einer Innenseite des Umspritzwerkzeugs abstützen.

Die Unteransprüche zeigen bevorzugte Weiterbildungen der Erfindung.

Grundsätzlich sind alle Geometrien bei der Ausgestaltung der Abstützelemente denkbar, die die Funktion des Abstützens gewährleisten. Jedoch werden Geometrien bevorzugt, welche die sonstige Handhabung des Montageelements nicht nachteilig beeinflussen. So soll zum Beispiel durch die Abstützelemente das Anbringen des Montageelements am Bauteilkörper und insbesondere am Bauteilgehäuse nicht oder nicht nennenswert erschwert werden. Das bedeutet zum Beispiel bei der Verwendung eines Clips, dass die zum Anclippen zu überwindende Kraft durch das Vorsehen der Abstützelemente höchstens gering gesteigert werden soll.

Eine besonders einfache und geeignete Struktur ergibt sich beim erfindungsgemäßen Montageelement dann, wenn gemäß einer bevorzugten Weiterbildung ein jeweiliges Abstützelement als Abstütznoppe ausgebildet ist.

Eine jeweilige Noppe kann zum Beispiel im Wesentlichen ausgebildet sein in der Form eines Zylinders, eines Kegels oder Kegelstumpfs, einer Pyramide oder eines Pyramidenstumpfs, eines Prismas oder eines Prismenstumpfs, einer Kugel oder eines Teils einer Kugel, eines Ellipsoids oder eines Teils eines Ellipsoids.

Bei einer anderen vorteilhaften Weiterbildung werden alternativ oder zusätzlich die Anzahl und/oder die gegenseitige geometrische Anordnung und/oder Orientierung relativ zueinander und/oder relativ zur Geometrie eines zu Grunde liegenden Körpers des Montageelements und/oder eines zu Grunde liegenden Umspritzwerkzeugs ausgebildet.

Dabei können die Anzahl, die Positionierung und/oder die Orientierung der Abstützelemente so gewählt werden, dass sie sich beim Vorgang des Umspritzens zum Beispiel gegen die Strömungsrichtung des Umspritzmaterials abstützen.

Bei einer bevorzugten Ausführungsform des erfindungsgemäßen Montageelements ist eine Mehrzahl von Abstützelementen paarweise am Montageelement ausgebildet.

Alternativ oder zusätzlich können Elemente eines jeweiligen Paares von Abstützelementen in Bezug auf das Montageelement im Wesentlichen einander - insbesondere diametral - gegenüberstehend am Montageelement angebracht sein, insbesondere in Bezug auf einen Schwerpunkt, eine Figurenachse, eine Symmetrieachse und/oder eine Symmetrieebene des Montageelements, um bei Aufnahme im Inneren eines Umspritzwerkzeugs beim Abstützen an der Innenseite ein Paar aus Lager und Widerlager zu bilden.

Bei einer anderen vorteilhaften zusätzlichen oder alternativen Weiterbildung des erfindungsgemäßen Montageelements ist dieses in materialeinstückiger Form ausgebildet.

Zusätzlich oder alternativ kann das erfindungsgemäße Montageelement mit einem federnden und/oder vorgespannten Clipbereich ausgebildet sein, welcher eingerichtet ist, einen Bereich eines Bauteilgehäuses federvorgespannt, formschlüssig und/oder kraftschlüssig mit Lager und Widerlager zum Haltern und Positionieren am Bauteilgehäuse zu umfassen.

Bei einer anderen vorteilhaften Ausgestaltungsform ist das erfindungsgemäße Montageelement mit einem Verbindungselement zur Aufnahme und zum Haltern des Anschlusselements und/oder mit oder aus einem Material ausgebildet, welches sich von einem vorgesehenen Umspritzmaterial der Auszubildenden Umspritzung unterscheidet.

Ferner betrifft die vorliegende Erfindung auch einen Montagesatz zur Montage eines Anschlusselements an ein Bauteilgehäuse eines Bauteilkörpers durch zumindest teilweises Umspritzen des Bauteilkörpers mit einem Umspritzmaterial.

Der erfindungsgemäße Montagesatz weist ein erfindungsgemäß ausgestaltetes Montageelement sowie ein Umspritzwerkzeug auf, wobei letzteres nach Art einer Spritzform oder Gussform ausgestaltet sein kann.

Beim erfindungsgemäßen Montagesatz ist das Umspritzwerkzeug dazu eingerichtet, das ein Anschlusselement halternde und positionierende Montageelement derart in seinem Inneren aufzunehmen, dass sich im aufgenommenen Zustand Abstützelemente des Montageelements an einer Innenseite des Umspritzwerkzeugs abstützen, insbesondere nach Art von Lagern und Widerlagern.

Bei einer vorteilhaften Ausführungsform des erfindungsgemäßen Montagesatzes weist dieser ein Umspritzmaterial in flüssiger oder pastöser Form auf, welches insbesondere zu einem dem Montageelement zu Grunde liegenden Material unterschiedlich ist, insbesondere in seiner Zusammensetzung.

Gemäß einem weiteren Aspekt der vorliegenden Erfindung wird auch ein Verfahren zum Montieren eines Anschlusselements an einen Bauteilkörper oder an ein Bauteilgehäuse eines Bauteilkörpers geschaffen.

Bei dem vorgeschlagenen Verfahren zum Montieren eines Anschlusselements wird zumindest ein Montageelement gemäß der vorliegenden Erfindung verwendet und insbesondere der erfindungsgemäße Montagesatz, wobei dabei das Anschlusselement an einem Bauteilkörpers oder an einem Bauteilgehäuse eines Bauteilkörpers mittels des Montageelements gehaltert und positioniert wird.

Gemäß einer Weiterbildung des erfindungsgemäßen Verfahrens wird im gehalterten Zustand das das Anschlusselement haltende und positionierende Montageelement gemeinsam mit zumindest einem Teil des Bauteilkörpers oder des Bauteilgehäuses des Bauteilkörpers derart im Inneren eines Umspritzwerkzeugs und insbesondere des Umspritzwerkzeugs des Montagesatzes aufgenommen, dass sich Abstützelemente auf einer Innenseite des Umspritzwerkzeugs abstützen.

Bei einer anderen vorteilhaften Ausgestaltungsform des erfindungsgemäßen Verfahrens wird in einem Zustand, bei welchem das das Anschlusselement halternde und positionierende Montageelement im Inneren des Umspritzwerkzeugs aufgenommen ist und bei welchem sich Abstützelemente des Montageelements an einer Innenseite des Umspritzwerkzeugs abstützen, ein Umspritzmaterial und insbesondere das Umspritzmaterial des Montagesatzes in das Umspritzwerkzeug eingefüllt und insbesondere ausgehärtet.

Bevorzugt wird dann nachfolgend das Umspritzwerkzeug unter Freigabe des Montageelements zur Fertigstellung des Bauteils mit Bauteilkörper, Anschlusselement und Montageelement entfernt.

Gemäß einer anderen bevorzugten Weiterbildung des erfindungsgemäßen Verfahrens wird als Bauteilkörper ein Ventil, Einspritzventil oder Hochdruckventil oder ein Grundkörper eines Ventils, Einspritzventils oder Hochdruckventils verwendet.

Zusätzlich oder alternativ kann bei dem erfindungsgemäßen Verfahren als Anschlusselement ein Steckerelement oder ein Flachstecker aus einem elektrisch leitfähigen Material und insbesondere aus Metall verwendet werden, wobei insbesondere vor einem Umspritzen das Steckerelement als Anschlusselement mit Versorgungs- und/oder Steueranschlüssen des Ventils oder des Grundkörpers des Ventils elektrisch verbunden wird, zum Beispiel durch Schweißen oder Löten.

Bei bevorzugten Ausgestaltungsformen des erfindungsgemäßen Verfahrens zum Montieren wird also ein Ventil, Einspritzventil oder Hochdruckventil hergestellt.

Schließlich ist ein weiterer Aspekt der vorliegenden Erfindung die Schaffung eines Bauteils, insbesondere eines elektrischen Bauteils, eines Ventils, eines Hochdruckventils oder eines Einspritzventils.

Das erfindungsgemäße Bauteil weist eine Umspritzung auf, in welcher ein erfindungsgemäßes Montageelement zum Teil eingebettet ist.

Insbesondere ist das erfindungsgemäße Bauteil auf der Grundlage einer Ausführungsform des erfindungsgemäßen Verfahrens zum Montieren hergestellt.

### Kurzbeschreibung der Figuren

Unter Bezugnahme auf die beigefügten Figuren werden Ausführungsformen der Erfindung im Detail beschrieben.
- Figur 1: zeigt in geschnittener Draufsicht eine Ausführungsform des erfindungsgemäßen Montagesatzes mit einem erfindungsgemäßen Montageelement im Inneren eines Umspritzwerkzeugs.
- Figuren 2 und 3: zeigen in perspektivischer Seitenansicht eine Ausführungsform des erfindungsgemäßen Montageelements, welches an einem Bauteilgehäuse vormontiert ist und ein Anschlusselement haltert, und zwar vor und nach Umspritzung mit einem Umspritzmaterial.
- Figuren 4 bis 6: zeigen in verschiedenen Ansichten eine Ausführungsform des erfindungsgemäßen Montageelements, welches ein Anschlusselement zur Vormontage haltert.
- Figur 7: zeigt analog zur Figur 1 ein herkömmliches Montageelement in einem Umspritzwerkzeug.

### Bevorzugte Ausführungsformen der Erfindung

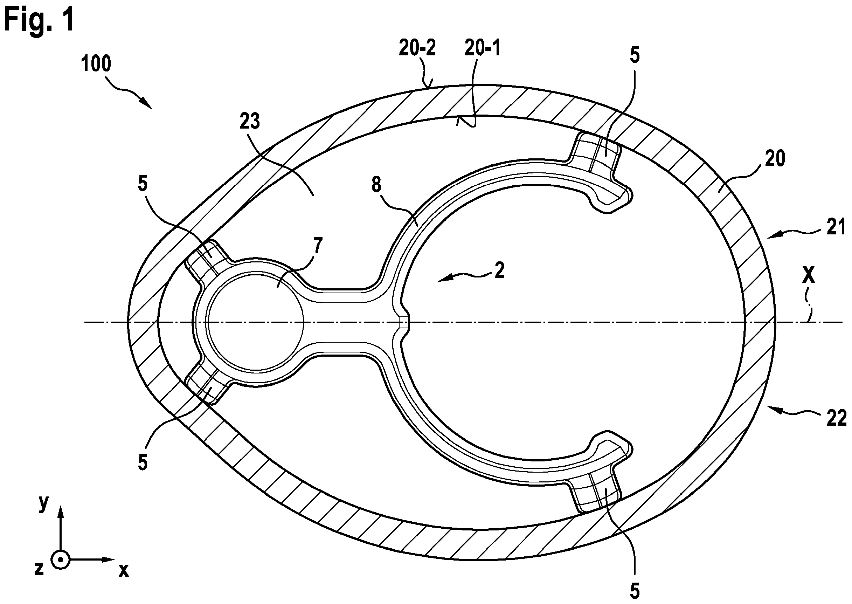

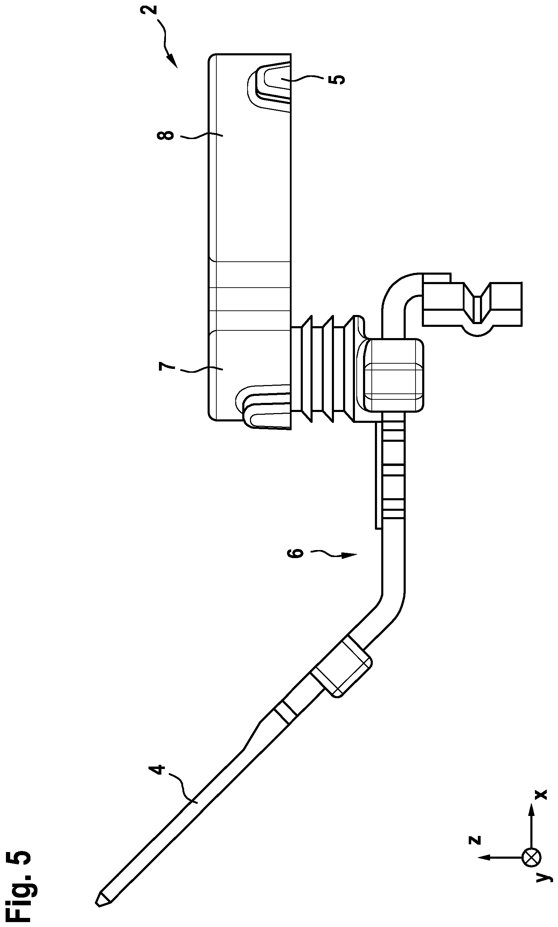

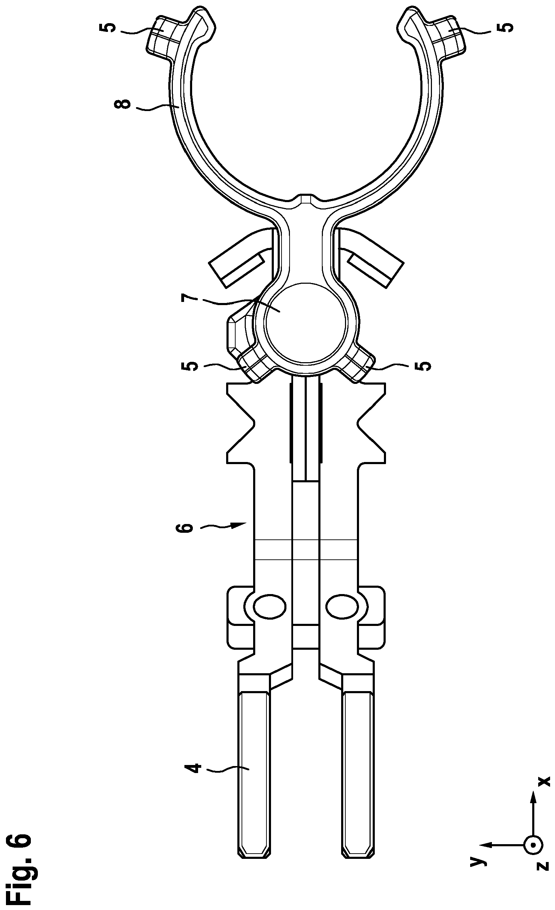

Nachfolgend werden unter Bezugnahme auf die Figuren 1 bis 7 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

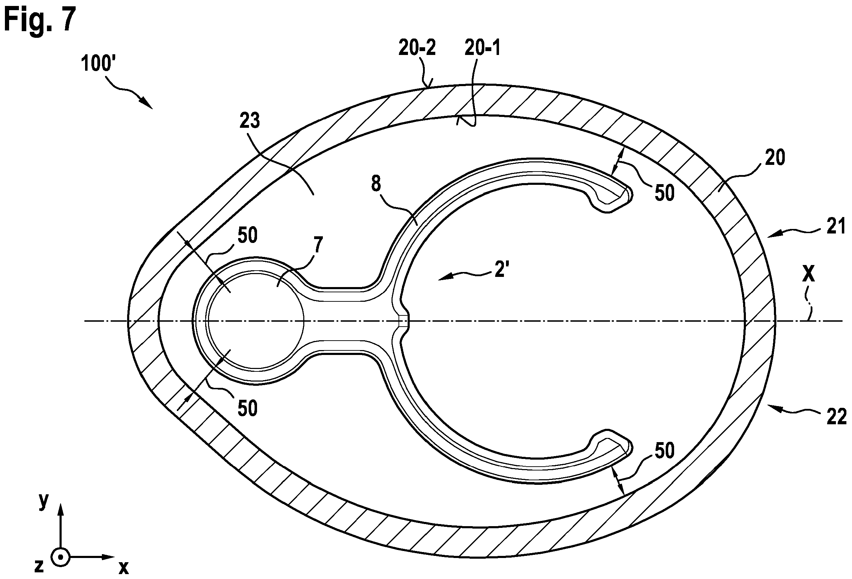

Bevor auf die Erfindung im Detail eingegangen wird, sollen zunächst unter Bezugnahme auf Figur 7 ein herkömmlicher Montagesatz 100' und insbesondere ein herkömmliches Montageelement 2` in einem Umspritzwerkzeug 20 erläutert werden.

In Figur 7 ist also in geschnittener Draufsicht ein herkömmlicher Montagesatz 100' dargestellt. Dieser besteht aus einem Umspritzwerkzeug 20, bestehend aus einem ersten Formteil 21 und einem zweiten Formteil 22, die in zusammengefügter Anordnung gemäß Figur 7 eine geschlossene Spritzform mit einem Inneren 23 bilden.

Im Inneren 23 des Umspritzwerkzeugs 20 ist in der in Figur 7 dargestellten Situation ein herkömmliches Montageelement 2', welches auch als Clip bezeichnet werden kann, gezeigt. Das herkömmliche Montageelement ist im Schnitt spiegelsymmetrisch zur Achse X ausgebildet, das heißt das Montageelement 2' als Ganzes ist zu einer Ebene spiegelsymmetrisch aufgebaut, die senkrecht zur Zeichenebene steht und die Achse X enthält.

Das herkömmliche Montageelement 2' gemäß der Ausführungsform aus Figur 7 weist einen Clipbereich 8 auf, mit welchem das herkömmliche Montageelement 2' an einem Grundkörper eines Bauteils, welcher hier nicht dargestellt ist, angebracht werden kann, und zwar mittels Formschluss und/oder Kraftschluss.

Zur Aufnahme einer vorzumontierenden Komponente, zum Beispiel eines Anschlusselements, eines Steckers oder dergleichen, weist das herkömmliche Montageelement 2' ein Verbindungselements 7 auf, welches auch als Verbindungsstück bezeichnet werden kann und welches eingerichtet ist, die vorzumontierende Komponente zu Haltern.

Entlang dieser Symmetrieebene lassen sich auch das erste und das zweite Formteil 21, 22 des Umspritzwerkzeugs 20 voneinander trennen.

Die in Figur 7 dargestellte Situation verdeutlicht, dass das herkömmliche Montageelement 2` zwar vollständig im Inneren 23 des Umspritzwerkzeugs 20 enthalten ist, aber tatsächlich vollkommen beabstandet ist von der Innenseite 20-1 der ersten und zweiten Formteile 21 und 22. Das bedeutet, dass zwischen der Innenseite 20-1 und dem herkömmlichen Montageelement 2' mit Clipbereich 8 und Verbindungselement 7 eine Lücke 50 ausgebildet ist.

Im Betrieb ergibt sich aus der in Figur 7 gezeigten Anordnung, dass beim Vorgang des Umspritzens das herkömmliche Montageelement 2` vollständig vom Umspritzmaterial umspült wird. Bei entsprechender Zähigkeit und/oder bei entsprechendem Druck können die auf das herkömmliche Montageelement 2' aufgeprägten Kräfte nicht durch entsprechende Gegenlager kompensiert werden, so dass bei entsprechender Stärke der Kräfte sich das vormontierte herkömmliche Montageelement 2' mit der gehalterten vorzumontierenden Komponente hinsichtlich Position und/oder Orientierung verschieben kann.

Dies führt herkömmlicherweise zu Qualitätseinbußen bei der Produktion.

Dieses Problem wird erfindungsgemäß durch das Vorsehen entsprechender Abstützelemente 5 am erfindungsgemäßen Montageelement 2 und insbesondere mit Anordnung an dessen Außenumfang vermieden.

Im Vergleich zu Figur 7 zeigt Figur 1 in geschnittener Draufsicht eine Ausführungsform des erfindungsgemäßen Montagesatzes 100 mit einem erfindungsgemäßen Montageelement 2, welches im Inneren 23 eines Umspritzwerkzeugs 20 angeordnet ist.

Im Unterschied zur Anordnung gemäß Figur 7 ist deutlich zu erkennen, dass der Clipbereich 8 und das Verbindungselement 7 jeweils mit einem Paar von Abstützelementen 5 in Form von Noppen ausgebildet sind. Eine jeweilige Noppe ist hier im Wesentlichen von kreiszylindrischer Gestalt. Diese Form ist jedoch nicht zwingend.

Deutlich zu erkennen ist, dass eine jeweilige Noppe als Abstützelement 5 sich an der Innenseite 20-1, die auch als Innenfläche bezeichnet werden kann, an einem jeweiligen Formteil 21, 22 vom Inneren 23 her abstützt. Beim Zuführen von Umspritzmaterial 1' zur Ausbildung einer Umspritzung 1 werden entsprechende Kräfte, die beim Umströmen des erfindungsgemäßen Montageelements 2 auf das Montageelement 2 ausgeübt werden, durch Abstützen an der Innenseite 20-1 aufgefangen und kompensiert. Dadurch wird verhindert, dass die Kräfte zu einer Änderung der Position und/oder der Orientierung des an einem Bauteilkörper 11 vormontierten Montageelements 2 führen.

Beim Vorgang des Umspritzens bleibt somit erfindungsgemäß das Montageelement 2 an der vorbestimmten Position und in der vorbestimmten Orientierung, so dass auch das vom Montageelement 2 gehalterte Anschlusselement 4 fixiert in der vorgewählten Position und Orientierung verbleibt.

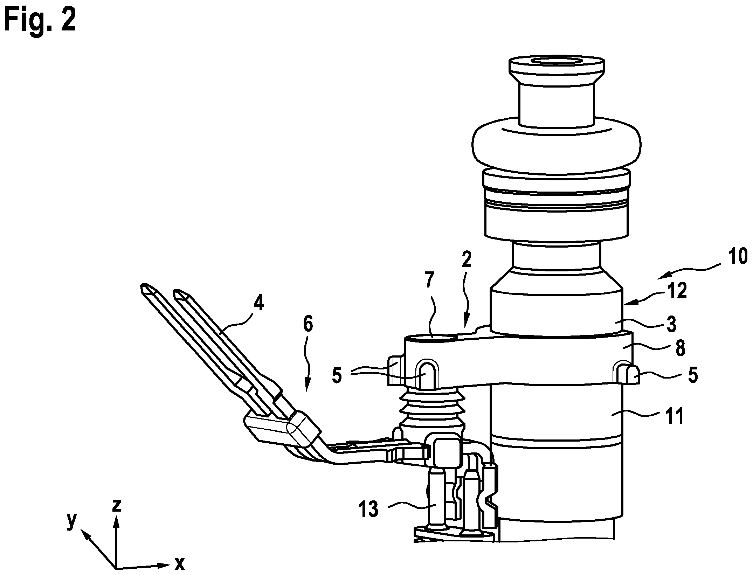

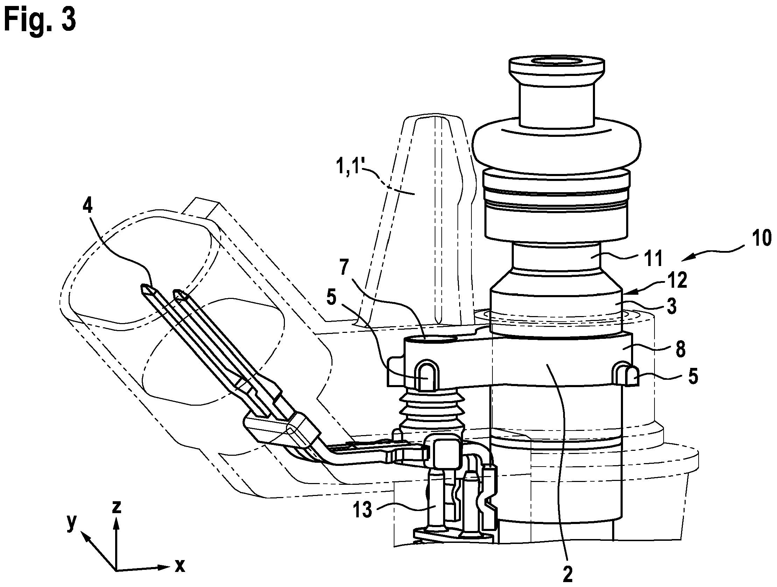

Die Figuren 2 und 3 zeigen in perspektivischer Seitenansicht eine Ausführungsform des erfindungsgemäßen Montageelements 2, welches über den Clipbereich 8 an einem Bauteilgehäuse 3 vormontiert ist und über das Verbindungselement 7 ein Anschlusselement 4 haltert, und zwar vor bzw. nach Ausbildung der Umspritzung 1 mit einem Umspritzmaterial 1'.

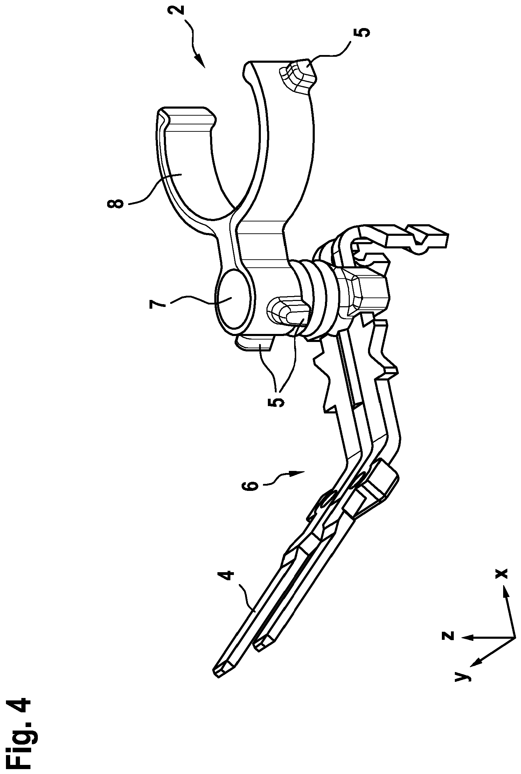

Die Figuren 4 bis 6 zeigen in verschiedenen Ansichten einer Ausführungsform des erfindungsgemäßen Montageelements 2, welches zur Vormontage am Gehäuseelement 3 eines Bauteils 10 mittels eines Clipbereichs 8 über ein Verbindungselement 7 ein Anschlusselement 4 zur Vormontage haltert.

Diese und weitere Merkmale und Eigenschaften der vorliegenden Erfindung werden an Hand der folgenden Darlegungen weiter erläutert:
Bei einem Einspritzventil als Bauteil 10 wird der Flachstecker 4 mit einem Halteclip als Montageelements 2 bei der Montage an die Anschlusshülse als Gehäuseelement 3 geclipt und anschließend auf die vorgesehene Position geschoben. Anschließend wir der Flachstecker 4 mit den Kontakten 13 der Magnetspule verbunden. In diesem Fall werden die elektrischen Leiter durch Widerstandschweißen verbunden.

Ein Clip 2, 2` wird benötigt, da ein gleichzeitiges Vormontieren und Schweißen in einem Arbeitsgang nicht ausgeführt werden kann.

Bei der Ausbildung der Umspritzung 1 des Einspritzventils 10 wird ein herkömmlicher Clip 2' - wie dies in Figur 7 dargestellt ist - durch die Umspritzungsmasse 1' so verformt oder verschoben, dass der herkömmliche Clip 2' auf die Wandung der Umspritzung 1 aufgeschwemmt wird und auf der Oberfläche der Umspritzung zu sehen ist. Durch das Verformen und Verschieben der Position des herkömmlichen Clips 2' werden auch die mit dem herkömmlichen Clip 2' verbundenen stromführenden Flachstecker 4 verschoben und können so auch auf die Oberfläche der Umspritzung 1 geschwemmt werden.

Es ist eine Aufgabe der vorliegenden Erfindung, mit möglichst einfachen und kostengünstigen Mitteln das Aufschwimmen des herkömmlichen Clips 2' und die daraus folgende Verschiebung der stromführenden Flachstecker 4 zu vermeiden.

Ein Verstärken des herkömmlichen Clips 2', um die Verformung zu verhindern, hätte zur Folge, dass sich die zu überwindende Clipkraft erhöht.

Eine andere Möglichkeit wäre die Veränderung der Anströmung oder anderer Einstellparameter der Maschine beim Ausbilden der Umspritzung 1. Dies ist jedoch in vielen Fällen technisch oder aus Kostengründen nicht möglich.

Die erfindungsgemäß vorgesehenen Abstütznoppen als Abstützelemente 5 können direkt bei der Herstellung des erfindungsgemäßen Clips 2 kostengünstig hergestellt werden. Es sind keine zusätzlichen Teile oder Arbeitsgänge notwendig.

Unter anderem zeigt Figur 3 ein Hochdruckeinspritzventil als erfindungsgemäßes Bauteil 10 mit der Umspritzung 1 - hier halbtransparent dargestellt - aus einem Umspritzmaterial 1' und dem erfindungsgemäßen Clip 2, der auf die Anschlusshülse 3 des Gehäuses 12 des Bauteilkörpers 11 aufgeclipt wird. Der erfindungsgemäße Clip 2 ist mit dem Flachstecker 4 fest verbunden.

In dem beschriebenen Fall wird der erfindungsgemäße Clip 2 mit vier Abstütznoppen 5 in dem Umspritzungswerkzeug 20 so positioniert, dass der Clip 2 und der mit ihm verbundene Flachstecker 4 sich beim Ausbilden der Umspritzung nicht verschieben können.

Die Abstütznoppen 5 werden so positioniert, dass sie sich beim Umspritzen im Werkzeug 20 an der Werkzeuginnenwand 20-1 abstützen. Die Position kann dabei so gewählt werden, dass sie sich gegen die Strömungsrichtung der eingespritzten Masse des Umspritzmaterials 1' abstützen.

Unter anderem zeigen die Figur 4 bis 6 einen Zustand, bei welchem die Flachsteckerbaugruppe 6 vor der Montage auf oder an der Anschlusshülse 3 gemäß Figur 3 angebracht ist.

Am erfindungsgemäßen Clip 2 und am Verbindungsstück 7 zum Flachstecker 4 sind in dem beschriebenen Fall vier Abstütznoppen 5 symmetrisch angebracht.

Es können erfindungsgemäß auch mehr oder weniger Abstütznoppen 5 angebracht werden.

Auch die Formen der Abstütznoppen können je nach Art der Abstützung und Bedingungen entsprechend gewählt werden.

## Patentansprüche

1. Montageelement (2), insbesondere Halteelement oder Clip, zur Montage eines Anschlusselements (4) an ein Bauteilgehäuse (12) eines Bauteilkörpers (11) durch zumindest teilweises Umspritzen des Bauteilkörpers (11) mit einem Umspritzmaterial (1')
- welches ausgebildet ist
- zum Haltern und Positionieren eines Anschlusselements (4) an einem Bauteilgehäuse (12) eines Bauteilkörpers (11) bei einem zumindest teilweisen Umspritzen des Bauteilkörpers (11) mit einem Umspritzmaterial (1') und
- zur zumindest teilweisen Aufnahme im Inneren (23) eines Umspritzwerkzeugs (20) während des Umspritzens,
- welches mindestens zwei Abstützelemente (5) aufweist und
- bei welchem die mindestens zwei Abstützelemente (5) so ausgebildet sind, dass sie sich in einem am Bauteilgehäuse (12) des Bauteilkörpers (11) gehalterten Zustand des Montageelements (2) bei Aufnahme des Bauteilkörpers (11) und des Montageelements (2) im Inneren (23) des Umspritzwerkzeugs (20) an einer Innenseite (20-1) des Umspritzwerkzeugs (20) abstützen,
**dadurch gekennzeichnet,**
**dass** das Montageelement (2) aus einem Clipbereich (8) und einem Verbindungselement (7) besteht, wobei das Montagelement (2) über den Clipbereich (8) an dem Bauteilgehäuse (12) vormontiert ist und über das Verbindungselement (7) das Anschlusselement (4) haltert, wobei der Clipbereich (8) und das Verbindungselement (7) jeweils mit einem Paar von Abstützelementen (5) in Form von Noppen ausgebildet sind.

2. Montageelement (2) nach einem der vorangehenden Ansprüche,
- bei welchem eine Mehrzahl von Abstützelementen (5) derart paarweise am Montageelement (2) ausgebildet ist,
- dass Elemente eines jeweiligen Paares von Abstützelementen (5) in Bezug auf das Montageelement (2) im Wesentlichen einander - insbesondere diametral - gegenüberstehend am Montageelement (2) angebracht sind, insbesondere in Bezug auf einen Schwerpunkt, eine Figurenachse, eine Symmetrieachse und/oder eine Symmetrieebene des Montageelements (2), um bei Aufnahme im Inneren (23) eines Umspritzwerkzeugs (20) beim Abstützen an der Innenseite (20-1) ein Paar aus Lager und Widerlager zu bilden.

3. Montageelement (2) nach einem der vorangehenden Ansprüche, welches ausgebildet ist - insbesondere in materialeinstückiger Form -
- mit einem federnden und/oder vorgespannten Clipbereich (8), welcher eingerichtet ist, einen Bereich eines Bauteilgehäuses (12) federvorgespannt, formschlüssig und/oder kraftschlüssig mit Lager und Widerlager zum Haltern und Positionieren am Bauteilgehäuse (12) zu umfassen.

4. Montagesatz (100) zur Montage eines Anschlusselements (4) an ein Bauteilgehäuse (12) eines Bauteilkörpers (11) durch zumindest teilweises Umspritzen des Bauteilkörpers (11) mit einem Umspritzmaterial (1'),
- mit
- einem Montageelement (2) nach einem der Ansprüche 1 bis 3 und
- einem Umspritzwerkzeug (20), insbesondere nach Art einer Spritzform oder Gussform,
- wobei das Umspritzwerkzeug (20) dazu eingerichtet ist, das ein Anschlusselement (4) halternde und positionierende Montageelement (2) derart in seinem Inneren (23) aufzunehmen, dass sich im aufgenommenen Zustand Abstützelemente (5) des Montageelements (2) an einer Innenseite (20-1) des Umspritzwerkzeugs (20) abstützen, insbesondere nach Art von Lagern und Widerlagern.

5. Verfahren zum Montieren eines Anschlusselements (4) an ein Bauteilgehäuse (12) eines Bauteilkörpers (11),
bei welchem unter Verwendung eines Montageelements (2) nach einem der Ansprüche 1 bis 3 und/oder eines Montagesatzes (100) nach Anspruch 4 das Anschlusselement (4) an einem Bauteilgehäuse (12) eines Bauteilkörpers (11) mittels des Montageelements (2) gehaltert und positioniert wird.

6. Verfahren nach Anspruch 5,
bei welchem im gehalterten Zustand das das Anschlusselement (4) halternde und positionierende Montageelement (2) gemeinsam mit zumindest einem Teil des Bauteilgehäuses (12) des Bauteilkörpers (11) derart im Inneren (23) eines Umspritzwerkzeugs (20) und insbesondere des Umspritzwerkzeugs (20) des Montagesatzes (100) aufgenommen wird, dass sich Abstützelemente (5) auf einer Innenseite (20-1) des Umspritzwerkzeugs (20) abstützen.

7. Verfahren nach Anspruch 6, bei welchem
- in einem Zustand, bei welchem das das Anschlusselement (4) halternde und positionierende Montageelement (2) im Inneren (23) des Umspritzwerkzeugs (20) aufgenommen ist und bei welchem sich Abstützelemente (5) des Montageelements (2) an einer Innenseite (20-1) des Umspritzwerkzeugs (20) abstützen, ein Umspritzmaterial (1') und insbesondere das Umspritzmaterial (1') des Montagesatzes (100) in das Umspritzwerkzeug (20) eingefüllt und insbesondere ausgehärtet wird und
- nachfolgend das Umspritzwerkzeug (20) unter Freigabe des Montageelements (2) zur Fertigstellung des Bauteils (10) mit Bauteilkörper (11), Anschlusselement (4) und Montageelement (2) entfernt wird.

8. Verfahren nach einem der Ansprüche 5 bis 7, bei welchem
- als Bauteilkörper (11) ein Ventil, Einspritzventil oder Hochdruckventil oder ein Grundkörper eines Ventils, Einspritzventils oder Hochdruckventils verwendet wird,
- als Anschlusselement (4) ein Steckerelement oder ein Flachstecker aus einem elektrisch leitfähigen Material und insbesondere aus Metall verwendet wird und insbesondere vor einem Umspritzen das Steckerelement mit Versorgungs- und/oder Steueranschlüssen des Ventils oder Grundkörpers des Ventils elektrisch verbunden wird, insbesondere durch Schweißen oder Löten, und/oder
- bei welchem ein Ventil, Einspritzventil oder Hochdruckventil hergestellt wird.

9. Einspritzventil,
- welches eine Umspritzung (1) aufweist und bei welchem in der Umspritzung (1) ein Montageelement (2) nach einem der Ansprüche 1 bis 3 zumindest teilweise eingebettet ist und/oder
- welches mittels eines Verfahrens nach einem der Ansprüche 5 bis 8 ausgebildet ist.

## Claims

1. Mounting element (2), in particular retaining element or clip, for mounting a connection element (4) on a component housing (12) of a component body (11) by at least partially overmoulding the component body (11) with an overmoulding material (1'),
- which mounting element is designed
- to retain and position a connection element (4) on a component housing (12) of a component body (11) while the component body (11) is being at least partially overmoulded with an overmoulding material (1'), and
- for at least partial accommodation in the interior (23) of an overmoulding tool (20) during the overmoulding operation,
- which mounting element has at least two support elements (5) and
- in the case of which mounting element the at least two support elements (5) are formed such that, when the mounting element (2) is retained on the component housing (12) of the component body (11), they are supported against an inner side (20-1) of the overmoulding tool (20) when the component body (11) and the mounting element (2) are accommodated in the interior (23) of the overmoulding tool (20),
**characterized in that**
the mounting element (2) consists of a clip region (8) and a connecting element (7), wherein the mounting element (2) is pre-mounted on the component housing (12) via the clip region (8) and retains the connection element (4) via the connecting element (7), wherein the clip region (8) and the connecting element (7) are each designed with a pair of support elements (5) in the form of studs.

2. Mounting element (2) according to one of the preceding claims,
- in the case of which a plurality of support elements (5) are formed in pairs on the mounting element (2) such that
- elements of a respective pair of support elements (5) are mounted on the mounting element (2) substantially opposite one another - in particular diametrically - with respect to the mounting element (2), in particular with respect to a centre of gravity, a figure axis, an axis of symmetry and/or a plane of symmetry of the mounting element (2), in order to form a pair composed of a bearing and a counterbearing on accommodation in the interior (23) of an overmoulding tool (20) and when being supported against the inner side (20-1).

3. Mounting element (2) according to either of the preceding claims, which is formed - in particular in one piece -
- with a resilient and/or biased clip region (8), which is configured to encompass a region of a component housing (12) in spring-biased, form-fitting and/or force-fitting fashion with a bearing and counterbearing for retaining and positioning on the component housing (12).

4. Mounting set (100) for mounting a connection element (4) on a component housing (12) of a component body (11) by at least partially overmoulding the component body (11) with an overmoulding material (1'),
- having
- a mounting element (2) according to one of Claims 1 to 3 and
- an overmoulding tool (20), in particular of the injection mould or casting mould type,
- wherein the overmoulding tool (20) is configured to accommodate the mounting element (2), which retains and positions a connection element (4), in its interior (23) such that, in the accommodated state, support elements (5) of the mounting element (2) are supported on an inner side (20-1) of the overmoulding tool (20), in particular in the manner of bearings and counterbearings.

5. Method for mounting a connection element (4) on a component housing (12) of a component body (11),
during which a mounting element (2) according to one of Claims 1 to 3 and/or a mounting set (100) according to Claim 4 are/is used to retain and position the connection element (4) on a component housing (12) of a component body (11) by means of the mounting element (2).

6. Method according to Claim 5,
during which, in the mounted state, the mounting element (2), which retains and positions the connection element (4), together with at least one part of the component housing (12) of the component body (11) is accommodated in the interior (23) of an overmoulding tool (20) and in particular of the overmoulding tool (20) of the mounting set (100) such that support elements (5) are supported on an inner side (20-1) of the overmoulding tool (20).

7. Method according to Claim 6, during which
- in a state in which the mounting element (2), which retains and positions the connection element (4), is accommodated in the interior (23) of the overmoulding tool (20) and in which support elements (5) of the mounting element (2) are supported on an inner side (20-1) of the overmoulding tool (20), an overmoulding material (1') and in particular the overmoulding material (1') of the mounting set (100) is filled into the overmoulding tool (20) and in particular hardened and
- subsequently the overmoulding tool (20) is removed resulting in release of the mounting element (2) to finish the component (10) with the component body (11), connection element (4) and mounting element (2).

8. Method according to one of Claims 5 to 7, during which
- the component body (11) used is a valve, injection valve or high-pressure valve or a main body of a valve, injection valve or high-pressure valve,
- the connection element (4) used is a plug-in element or a flat plug made of an electrically conductive material and in particular of metal and in particular before the overmoulding operation the plug-in element is electrically conductively connected, in particular by welding or soldering, to power supply and/or control ports of the valve or main body of the valve, and/or
- during which a valve, injection valve or high-pressure valve is produced.

9. Injection valve,
- which has an overmoulding (1) and in the case of which a mounting element (2) according to one of Claims 1 to 3 is at least partially embedded in the overmoulding (1), and/or
- which is formed by a method according to one of Claims 5 to 8.

## Revendications

1. Élément de montage (2), notamment élément de maintien ou clip, pour le montage d'un élément de raccordement (4) sur un boîtier de composant (12) d'un corps de composant (11) par surmoulage au moins partiel du corps de composant (11) avec un matériau de surmoulage (1')
- qui est réalisé
- pour maintenir et positionner un élément de raccordement (4) sur un boîtier de composant (12) d'un corps de composant (11) lors d'un surmoulage au moins partiel du corps de composant (11) avec un matériau de surmoulage (1') et
- pour le logement au moins partiel à l'intérieur (23) d'un outil de surmoulage (20) pendant le surmoulage,
- qui présente au moins deux éléments d'appui (5) et
- dans lequel les au moins deux éléments d'appui (5) sont réalisés de telle sorte que, dans un état de l'élément de montage (2) maintenu sur le boîtier de composant (12) du corps de composant (11), ils s'appuient sur un côté intérieur (20-1) de l'outil de surmoulage (20) lors de la réception du corps de composant (11) et de l'élément de montage (2) à l'intérieur (23) de l'outil de surmoulage (20),
**caractérisé en ce que**
l'élément de montage (2) est constitué d'une zone de clipsage (8) et d'un élément de liaison (7), l'élément de montage (2) étant prémonté sur le boîtier de composant (12) par l'intermédiaire de la zone de clipsage (8) et maintenant l'élément de raccordement (4) par l'intermédiaire de l'élément de liaison (7), la zone de clipsage (8) et l'élément de liaison (7) étant réalisés chacun avec une paire d'éléments d'appui (5) sous forme de picots.

2. Élément de montage (2) selon l'une quelconque des revendications précédentes,
- dans lequel une pluralité d'éléments d'appui (5) sont réalisés par paires sur l'élément de montage (2) de telle sorte
- que des éléments d'une paire respective d'éléments d'appui (5) sont disposés sur l'élément de montage (2) en étant essentiellement opposés l'un à l'autre - notamment diamétralement - par rapport à l'élément de montage (2), notamment par rapport à un centre de gravité, un axe de figure, un axe de symétrie et/ou un plan de symétrie de l'élément de montage (2), afin de former une paire de palier et de contre-appui lors de la réception à l'intérieur (23) d'un outil de surmoulage (20) lors de l'appui sur le côté intérieur (20-1).

3. Élément de montage (2) selon l'une quelconque des revendications précédentes, qui est réalisé - notamment sous forme de matériau unique -
- avec une zone de clipsage (8) élastique et/ou précontrainte, qui est adaptée pour entourer une zone d'un boîtier de composant (12) précontrainte par ressort, par complémentarité de forme et/ou par adhérence avec un palier et un contre-appui pour le maintien et le positionnement sur le boîtier de composant (12).

4. Kit de montage (100) pour le montage d'un élément de raccordement (4) sur un boîtier de composant (12) d'un corps de composant (11) par surmoulage au moins partiel du corps de composant (11) avec un matériau de surmoulage (1'),
- avec
- un élément de montage (2) selon l'une quelconque des revendications 1 à 3, et
- un moule de surmoulage (20), notamment du type moule d'injection ou moule de coulée,
- l'outil de surmoulage (20) étant adapté pour recevoir dans son intérieur (23) l'élément de montage (2) maintenant et positionnant un élément de raccordement (4) de telle sorte qu'à l'état reçu, des éléments d'appui (5) de l'élément de montage (2) s'appuient sur un côté intérieur (20-1) de l'outil de surmoulage (20), notamment à la manière de paliers et de contre-appuis.

5. Procédé de montage d'un élément de raccordement (4) sur un boîtier de composant (12) d'un corps de composant (11),
dans lequel, en utilisant un élément de montage (2) selon l'une quelconque des revendications 1 à 3 et/ou un kit de montage (100) selon la revendication 4, l'élément de raccordement (4) est maintenu et positionné sur un boîtier de composant (12) d'un corps de composant (11) au moyen de l'élément de montage (2).

6. Procédé selon la revendication 5,
dans lequel, à l'état maintenu, l'élément de montage (2) maintenant et positionnant l'élément de raccordement (4) est reçu, conjointement avec au moins une partie du boîtier de composant (12) du corps de composant (11), à l'intérieur (23) d'un outil de surmoulage (20) et notamment de l'outil de surmoulage (20) du kit de montage (100), de telle sorte que des éléments d'appui (5) s'appuient sur un côté intérieur (20-1) de l'outil de surmoulage (20).

7. Procédé selon la revendication 6, dans lequel
- dans un état dans lequel l'élément de montage (2) maintenant et positionnant l'élément de raccordement (4) est reçu à l'intérieur (23) de l'outil de surmoulage (20) et dans lequel des éléments d'appui (5) de l'élément de montage (2) s'appuient sur un côté intérieur (20-1) de l'outil de surmoulage (20), un matériau de surmoulage (1') et notamment le matériau de surmoulage (1') du kit de montage (100) est versé dans l'outil de surmoulage (20) et notamment durci et
- ensuite, l'outil de surmoulage (20) est retiré en libérant l'élément de montage (2) pour achever le composant (10) avec le corps de composant (11), l'élément de raccordement (4) et l'élément de montage (2).

8. Procédé selon l'une quelconque des revendications 5 à 7, dans lequel
- on utilise comme corps de composant (11) une soupape, une soupape d'injection ou une soupape haute pression ou un corps de base d'une soupape, d'une soupape d'injection ou d'une soupape haute pression,
- on utilise comme élément de raccordement (4) un élément de fiche ou une fiche plate en un matériau électriquement conducteur et notamment en métal et, notamment, avant un surmoulage, l'élément de fiche est relié électriquement à des raccords d'alimentation et/ou de commande de la soupape ou du corps de base de la soupape, notamment par soudage ou brasage, et/ou
- dans lequel une soupape, une soupape d'injection ou une soupape haute pression est fabriqué.

9. Soupape d'injection,
- qui présente un surmoulage (1) et dans laquelle un élément de montage (2) selon l'une quelconque des revendications 1 à 3 est au moins partiellement noyé dans le surmoulage (1) et/ou
- qui est réalisée au moyen d'un procédé selon l'une quelconque des revendications 5 à 8.
